# EUROPÄISCHE PATENTSCHRIFT

(11) **EP 2 767 925 B1**
(45) Veröffentlichungstag und Bekanntmachung des Hinweises auf die Patenterteilung: **07.04.2021**
(21) Anmeldenummer: 14153994.0
(22) Anmeldetag: 05.02.2014
(51) Int. Cl.: G06K 9/00, G06K 9/46

(54) **Verfahren zur Erkennung von Objekten in einem Lager und/oder zur räumlichen Orientierung in einem Lager**
Method for the detection of objects in a warehouse and/or for spatial orientation in a warehouse
Procédé de détection d'objets dans un entrepôt et/ou d'orientation spatiale dans un entrepôt

(30) Priorität: 15.02.2013 DE 102013002554
(43) Veröffentlichungstag der Anmeldung: 20.08.2014
(73) Patentinhaber: Jungheinrich Aktiengesellschaft, 22047 Hamburg (DE)
(72) Erfinder: Halata, Philipp, 21073 Hamburg (DE)
(74) Vertreter: Hauck Patentanwaltspartnerschaft mbB

(56) Entgegenhaltungen:
- EP-A1- 2 468 678
- EP-A2- 2 136 319
- US-A1- 2005 094 879
- US-A1- 2012 250 978
- BRIAN OKORN ET AL: "Toward Automated Modeling of Floor Plans", PROCEEDINGS OF THE SYMPOSIUM ON 3D DATA PROCESSING, VISUALIZATION AND TRANSMISSION, 2010, ESPACE SAINT MARTIN, PARIS, FRANCE,, 17. Mai 2010 (2010-05-17), XP055089590, DOI: 10.1.1.180.4602
- DANIEL HUBER ET AL: "Using laser scanners for modeling and analysis in architecture, engineering, and construction", INFORMATION SCIENCES AND SYSTEMS (CISS), 2010 44TH ANNUAL CONFERENCE ON, IEEE, PISCATAWAY, NJ, USA, 17. März 2010 (2010-03-17), Seiten 1-6, XP031676435, ISBN: 978-1-4244-7416-5
- EDOUARD IVANJKO ET AL: "Correlation Based Approach to Mobile Robot Pose Tracking in Unknown Environments", INFORMATION TECHNOLOGY INTERFACES, 2007. ITI 2007. 29TH INTERNATIONAL CONFERENCE ON, IEEE, PI, 1. Juni 2007 (2007-06-01), Seiten 445-450, XP031123139, ISBN: 978-953-7138-09-7
- KATE SAENKO ET AL: "Practical 3-D object detection using category and instance-level appearance models", INTELLIGENT ROBOTS AND SYSTEMS (IROS), 2011 IEEE/RSJ INTERNATIONAL CONFERENCE ON, IEEE, 25. September 2011 (2011-09-25), Seiten 793-800, XP032060672, DOI: 10.1109/IROS.2011.6048691 ISBN: 978-1-61284-454-1

## Beschreibung

Die Erfindung betrifft ein Verfahren zur Erkennung von Objekten in einem Lager und/oder zur räumlichen Orientierung in einem Lager, bei dem Bilddaten erfasst und ausgewertet werden. Zu diesem Zweck ist es auf dem Gebiet der Lagerlogistik bekannt, Flurförderzeuge mit Laserscannern auszustatten. Diese können insbesondere in Kombination mit im Lager positionierten Reflexionsmarken Aufschluss über die Position des Flurförderzeugs im Lager liefern und auf diese Weise andere Navigationssysteme ergänzen oder komplett ersetzen. Ebenfalls bekannt ist die Verwendung von Laserscannern zur Unterstützung von Ein- und Auslagerungsvorgängen.

Aus der Druckschrift EP 2 468 678 A2 ist bekannt geworden, ein Time-of-Flight-Kamerasystem an einem Flurförderzeug anzuordnen und auf diese Weise ein dreidimensionales Abbild einer Umgebung des Flurförderzeugs zu erfassen. Dieses wird insbesondere zur Unterstützung einer Bedienperson eingesetzt, indem Ein- und Auslagerungsvorgänge teilweise automatisiert werden.

Davon ausgehend ist es die Aufgabe der Erfindung, ein Verfahren zur Erkennung einer Hauptebene in einem Lager zur Verfügung zu stellen, bei dem die Erfassung und Auswertung dreidimensionaler Bilddaten besser an die speziellen Einsatzbedingungen eines Flurförderzeugs angepasst ist, so dass es einfacher und zuverlässiger ausgeführt werden kann, sowie ein hierfür geeignetes Flurförderzeug.

Diese Aufgabe wird gelöst durch das Verfahren mit den Merkmalen des Anspruchs 1. Vorteilhafte Ausgestaltungen sind in den sich anschließenden Unteransprüchen angegeben.

Das Verfahren dient zur Erkennung einer Hauptebene in einem Lager und weist die folgenden Schritte auf:
- Erfassen von Bilddaten mit einer 3D-Kamera, die an einem Flurförderzeug befestigt ist, so dass eine Blickrichtung der 3D-Kamera einen definierten Winkel zur Horizontalen aufweist, wobei die 3D-Kamera einen Bildsensor mit matrixartig angeordneten Sensorelementen aufweist und die Bilddaten eine Vielzahl von Bildpunkten umfassen, wobei jedem Bildpunkt eine Entfernungsinformation zugeordnet ist,
- Berechnen von Winkelangaben für eine Vielzahl von Bildelementen, die jeweils einen Winkel zwischen einer von dem Bildelement repräsentierten Fläche und einer vertikalen Referenzebene angeben,
- Festlegen einer Vorzugsrichtung auf Grundlage der Häufigkeiten der berechneten Winkelangaben,
- Berechnen der Positionen der erfassten Bildpunkte entlang der Vorzugsrichtung,
- Erkennen mindestens einer Hauptebene des Lagers auf Grundlage einer Häufigkeitsverteilung der berechneten Positionen.

Die mit der 3D-Kamera erfassten Bilddaten sind ein räumliches Abbild der Umgebung, weil jedem Bildpunkt eine Entfernungsinformation zugeordnet ist. Derartige Bilddaten werden auch als Punktwolke bezeichnet. Die Punktwolke enthält eine Vielzahl von Punkten, deren Anordnung im Raum durch Angabe der Koordinaten in einem dreidimensionalen Koordinatensystem beschrieben ist. Hierzu kann beispielsweise ein kartesisches Koordinatensystem verwendet werden, dessen Achsenrichtungen eine feste Orientierung relativ zur Blickrichtung der 3D-Kamera aufweisen. Beispielsweise können die x-Achse in Blickrichtung der 3D-Kamera nach rechts, die y-Achse senkrecht nach unten und die z-Achse in Blickrichtung der 3D-Kamera weisen. Der Bildsensor weist matrixartig angeordnete Sensorelemente auf, beispielsweise in einem rechteckigen Raster mit 640x480 Sensorelementen. Jedes Sensorelement kann einem Bildpunkt entsprechen. Um jedem Bildpunkt eine Entfernungsinformation zuzuordnen, können unterschiedliche Techniken, abhängig vom Typ der verwendeten 3D-Kamera, eingesetzt werden. Im Beispiel liefert die 3D-Kamera Bilddaten mit 640x480 Bildpunkten, die jeweils durch ihre x-, y- und z-Koordinaten gekennzeichnet sind.

Bei der Erfindung werden für eine Vielzahl von Bildelementen Winkelangaben berechnet. Jedes Bildelement besteht aus einer Vielzahl von rechnerisch zusammengefassten Bildpunkten. Jedes Bildelement repräsentiert eine Fläche, d.h. eine mehr oder weniger der 3D-Kamera zugewandte Oberfläche eines Gegenstands im Blickfeld der 3D-Kamera. Die Winkelangabe beschreibt einen Winkel zwischen dieser Fläche und einer vertikalen Referenzebene. Die vertikale Referenzebene kann beispielsweise eine vertikale Ebene in Blickrichtung der 3D-Kamera sein. Im oben genannten Beispiel eines Koordinatensystems wäre dies die y-z-Ebene. Es kann jedoch auch eine sonstige vertikale Ebene als Referenzebene verwendet werden, insbesondere eine relativ zur Anordnung der 3D-Kamera fest angeordnete vertikale Ebene.

Um die benötigte Winkelangabe zu berechnen, kann zunächst ein Normalenvektor auf die von dem Bildelement repräsentierte Fläche berechnet werden. Anschließend kann der Winkel zwischen diesem Normalenvektor und der Referenzebene berechnet werden. Dies entspricht einer Projektion der Normalenvektoren auf eine horizontale Ebene, in der die Winkel zur Referenzebene veranschaulicht werden können.

Auf Grundlage der Häufigkeiten der berechneten Winkelangaben wird eine Vorzugsrichtung festgelegt. Hierzu kann ein Histogramm der berechneten Winkelangaben erstellt werden, wobei alle berechneten Winkelangaben, die sich in bestimmten Winkelintervallen befinden, aufsummiert werden. Das Maximum dieses Histogramms gibt an, in welchem der Winkelintervalle die größte Anzahl der untersuchten Bildelemente relativ zur Referenzebene angeordnet sind. Diese am häufigsten vorkommende Ausrichtung der Bildelemente relativ zur Referenzebene stellt eine Vorzugsrichtung dar.

Nach Festlegen der Vorzugsrichtung werden die Positionen der erfassten Bildpunkte entlang der Vorzugsrichtung berechnet. Diese Positionen entsprechen den Abständen der einzelnen Bildpunkte von einer gedachten, senkrecht auf die Vorzugsrichtung stehenden Ebene. Mathematisch kann dies beispielsweise durch eine Koordinatentransformation in ein neues Koordinatensystem bewerkstelligt werden, wobei eine der Achsen des neuen Koordinatensystems in der Vorzugsrichtung ausgerichtet ist. Dann entspricht die Koordinate eines Bildpunkts für diese Achsenrichtung der zu berechnenden Position.

Schließlich wird eine Hauptebene des Lagers auf Grundlage einer Häufigkeitsverteilung der berechneten Positionen erkannt. Hierzu kann ebenfalls ein Histogramm erstellt werden, diesmal für die berechneten Positionen, die wiederum in Positionsintervalle von vorgegebener Größe "einsortiert" werden können. Ein Maximum dieser Häufigkeitsverteilung bedeutet, dass an der zugehörigen Position, also in einer senkrecht auf die Vorzugsrichtung stehenden Ebene an dieser bestimmten Position entlang der Vorzugsrichtung, besonders viele Bildpunkte erkannt wurden. Diese Ebene stellt daher eine Hauptebene des Lagers dar. Bei dem Maximum der Häufigkeitsverteilung der berechneten Positionen kann es sich um ein absolutes Maximum oder um ein lokales Maximum handeln. Weist die Häufigkeitsverteilung mehrere Maxima auf, können auch mehrere Hauptebenen des Lagers in der geschilderten Weise erkannt werden.

Das Erkennen der Hauptebenen ermöglicht zum einen eine räumliche Orientierung in dem Lager, denn die erkannten Hauptebenen repräsentieren besonders markante Strukturen in dem Lager. Wird das Verfahren zum anderen zur Erkennung von Objekten in dem Lager angewendet, können einerseits die erkannten Hauptebenen mit bestimmten Objekten in Verbindung gebracht und als solche erkannt werden. Andererseits kann eine weitere Auswertung der Bilddaten unter Ausnutzung der erkannten Hauptebenen erfolgen, wodurch - wie weiter unten noch erläutert werden wird - zusätzlich zu den Hauptebenen weitere Objekte besonders einfach erkannt werden können.

Bei der Erfindung werden die typischen Gegebenheiten von mit Flurförderzeugen bewirtschafteten Lagern ausgenutzt. Die Erfinder haben erkannt, dass die wesentlichen Strukturen derartiger Lager, beispielsweise Wände, Regale, einzelne Regalträger, in den Regalen gelagerte Paletten oder Transportbehälter, Wand- und Deckenflächen usw., in der Regel rechtwinklig zueinander angeordnet sind. Eine besondere Rolle spielen dabei die Horizontal- und die Vertikalrichtung, die in der Regel von den Bodenflächen einzelner Lagerplätze bzw. den unterschiedlichsten vertikalen Trägern und vielen anderen seitlichen Flächen strikt eingehalten werden. Hierdurch unterscheiden sich typische Lager wesentlich von anderen Umgebungen, beispielsweise der Umgebung eines über eine Landstraße fahrenden Kraftfahrzeugs.

Die Erfindung macht sich diese besonderen Gegebenheiten typischer Lager zunutze, um die Auswertung der Bilddaten, die sehr zeit- und rechenintensiv ist, gezielt zu vereinfachen. So wird bei der Berechnung der Winkelangaben ausgenutzt, dass die Blickrichtung der 3D-Kamera einen definierten Winkel zur Horizontalen aufweist, sodass unmittelbar Winkelangaben in Bezug auf eine vertikale Referenzebene berechnet werden können. Die nachfolgenden Auswertungsschritte erfolgen im Wesentlichen auf Grundlage von Häufigkeitsverteilungen, was bei einer computergestützten Auswertung der Bilddaten besonders einfach möglich ist. Im Ergebnis können die relevanten Hauptebenen des Lagers mit geringem Rechenaufwand, d.h. mit relativ kostengünstigen Rechnern und/oder besonders schnell, und dennoch zuverlässig erkannt werden.

In einer Ausgestaltung werden die Bildelemente, für die die Winkelangaben berechnet werden, jeweils durch eine Mittelung über alle in einem vorgegebenen Volumenelement enthaltenen Bildpunkte berechnet. Grundsätzlich kann zu jedem erfassten Bildpunkt eine Winkelangabe berechnet werden. Um den einzelnen Bildpunkt als Fläche mit einer definierten Richtung auffassen zu können, müssen bei dieser Auswertung benachbarte Bildpunkte herangezogen werden. Die Berechnung der Winkelangaben ist daher relativ aufwendig. Werden durch eine Mittelung mehrere der erfassten Bildpunkte zu einem Bildelement zusammengefasst, das dann eine größere Fläche der erfassten Szenerie repräsentiert, müssen entsprechend weniger Winkelangaben berechnet werden. Die Mittelung kann über alle in einem vorgegebenen Volumenelement enthaltenen Bildpunkte erfolgen, d.h. dass der von der Punktwolke bevölkerte Raum in eine Vielzahl von gleichförmigen, quaderförmigen Volumenelementen unterteilt wird. Beispielsweise können die Volumenelemente, auch als Voxel bezeichnet, Kantenlängen im Bereich von 5 cm bis 40 cm, bevorzugt von etwa 20 cm, aufweisen. Versuche haben ergeben, dass auch bei Verwendung eines solchen relativ groben Rasters die Hauptebenen typischer Lagerumgebungen zuverlässig erkannt werden. Gleichzeitig wird die Rechenzeit für die Auswertung der Bilddaten erheblich verringert, weil die Mittelung über die Bildpunkte eines Volumenelements wesentlich schneller auszuführen ist als die Berechnung einer entsprechend größeren Anzahl von Winkelangaben.

In einer Ausgestaltung ist eine der Hauptebenen eine Wandebene, die an einer ersten Position und senkrecht zu der Vorzugsrichtung erkannt wird, wenn die Häufigkeitsverteilung an der ersten Position ein erstes Maximum aufweist und die Anzahl von Bildpunkten mit weiter von dem Flurförderzeug entfernten Positionen geringer ist als ein vorgegebener erster Grenzwert. Im Blickfeld der 3D-Kamera befindliche Wandflächen des Lagers führen in der Regel zu einem ausgeprägten Maximum in der Häufigkeitsverteilung der Positionen. Charakteristisch für Wandflächen ist dabei, dass sich dahinter, also in größerer Entfernung von dem Flurförderzeug, keine weiteren Bildpunkte befinden. Liegen diese Bedingungen vor, wird eine Wandebene erkannt. Der vorgegebene erste Grenzwert schließt einzelne wahrscheinlich aufgrund von Messfehlern (Rauschen) hinter der Wandebene erfasste Bildpunkte bei der Erkennung der Wandebene aus.

In einer Ausgestaltung ist eine der Hauptebenen eine Regalfrontebene, die an einer zweiten Position und senkrecht zu der Vorzugsrichtung erkannt wird, wenn die Häufigkeitsverteilung an der zweiten Position ein zweites Maximum aufweist und die zweite Position um 0,9 m bis 1,7 m näher an der 3D-Kamera angeordnet ist als die erste Position. Eine Regalfrontebene ist die vorderste, der 3D-Kamera zugewandte Fläche eines Regals. Sie befindet sich bei typischen Lagern häufig in einem Abstand von etwa 1,2 m vor einer Wand. Sofern die Wand durch das Regal hindurch zumindest teilweise sichtbar bleibt, ergibt das Histogramm der Positionen zwei Maxima: Ein erstes Maximum in einem größeren Abstand von der 3D-Kamera, welches die Wandebene charakterisiert, und ein zweites Maximum an einer zweiten Position im Bereich von 0,9 m bis 1,7 m vor der Wandebene. Liegen diese Bedingungen vor, wird eine Regalfrontebene an der zweiten Position erkannt.

In einer Ausgestaltung ist eine der Hauptebenen eine Regalfrontebene, die an einer dritten Position und senkrecht zu der Vorzugsrichtung erkannt wird, wenn die Häufigkeitsverteilung nur ein einziges ausgeprägtes Maximum aufweist, das an der dritten Position angeordnet ist, und die Anzahl von Bildpunkten mit weiter von der 3D-Kamera entfernten Positionen größer ist als ein vorgegebener zweiter Grenzwert. Diese Konstellation ergibt sich in typischen Lagern, wenn hinter dem Regal keine Wand sichtbar ist. In diesem Fall befindet sich im Histogramm der Positionen am Ort der Regalfrontebene ein einziges ausgeprägtes Maximum. Die hinter der Regalfrontebene erfassten Bildpunkte können beispielsweise von eingelagerten Gegenständen oder hinteren Regalträgem herrühren. Ihre Anzahl übersteigt dann den vorgegebenen zweiten Grenzwert und hilft, das einzige ausgeprägte Maximum als Regalfrontebene, nicht als Wandfläche, zu erkennen.

In einer Ausgestaltung weist das Verfahren die folgenden weiteren Schritte auf:
- Projizieren der Bildpunkte, die in einer Umgebung einer erkannten Hauptebene liegen, auf diese Hauptebene, und
- Erkennen von Objekten des Lagers durch Vergleich der projizierten, zweidimensionalen Daten mit vordefinierten Mustern.

Mit anderen Worten wird die erkannte Hauptebene zur Erkennung weiterer Objekte des Lagers verwendet. Hierzu werden Bildpunkte, die sich einer Umgebung der Hauptebene befinden, zunächst auf die Hauptebene projiziert. Die Umgebung kann beispielsweise durch einen vorgegebenen Abstandsbereich von der erkannten Hauptebene charakterisiert sein. Beispielsweise werden alle erfassten Bildpunkte auf die Hauptebene projiziert, die sich in einem Abstand von weniger als 25 cm vor der erkannten Hauptebene und weniger als 1,2 m hinter der erkannten Hauptebene befinden. In diesem Beispiel werden, falls es sich bei der erkannten Hauptebene um eine Regalfrontebene handelt, auch unter Berücksichtigung von Toleranzen bei der Erfassung der Bilddaten, sämtliche Bildpunkte in die weitere Auswertung einbezogen, die zu Objekten innerhalb des Regals gehören. Nach der Projektion der so vorselektierten Bildpunkte auf die Hauptebene erfolgt die weitere Auswertung auf Grundlage der projizierten, zweidimensionalen Daten. Sie ist daher weniger rechenintensiv. Bei der Ausgestaltung kommen Verfahren der Mustererkennung zum Einsatz, bei denen die projizierten, zweidimensionalen Daten mit vordefinierten Mustern verglichen werden. Diese Verfahren sind auch als "template matching" bekannt. Ein Vorteil der Verwendung einer 3D-Kamera als Grundlage für diese Mustererkennungsverfahren besteht darin, dass die auszuwertenden Daten die richtige Skalierung aufweisen, was die Mustererkennung vereinfacht. Bei der Mustererkennung können zunächst durch den genannten Vergleich Übereinstimmungsgrade zwischen den vordefinierten Mustern und bestimmten Bereichen der projizierten, zweidimensionalen Daten ermittelt werden. Diese entsprechen Wahrscheinlichkeiten dafür, dass die erfassten Daten auf einen dem vordefinierten Muster entsprechenden Gegenstand zurückzuführen sind. Für bestimmte, häufig über die gesamte Höhe oder Breite des Bildes erstreckte Strukturen können die so gefundenen Übereinstimmungsgrade zeilen- oder spaltenweise aufaddiert werden. Beispielsweise können zum Erkennen von horizontalen Regalträgern die ermittelten Übereinstimmungsgrade zeilenweise aufaddiert werden. Diejenigen Zeilen mit dem insgesamt höchsten Übereinstimmungsgrad stellen mit hoher Wahrscheinlichkeit einen horizontalen Regalträger dar. Dies gilt entsprechend für vertikale Regalträger, bei denen die gefunden Übereinstimmungsgrade spaltenweise aufaddiert werden.

Den geschilderten Auswertungsschritten kann eine abschließende Plausibilitätsbewertung hinzugefügt werden. Werden bei der Mustererkennung zum Beispiel Paletten erkannt, die sich nicht innerhalb von 20 cm oberhalb eines horizontalen Regalträgers oder oberhalb des Bodens befinden, kann es sich nicht um Paletten handeln. In diesem Fall wird an dem genannten Ort keine Palette erkannt. Gleiches gilt für eine Palette, deren Position sich mit einem vertikalen Regalträger schneidet. In diesem Fall kann es sich entweder bei dem ersten erkannten Objekt nicht um eine Palette oder bei dem zweiten erkannten Objekt nicht um einen vertikalen Regalträger handeln.

Die oben angegebene Aufgabe wird ebenfalls gelöst durch das nachfolgend beschriebene, nicht beanspruchte Verfahren.

Das Verfahren dient zur Erkennung von Objekten in einem Lager und/oder zur räumlichen Orientierung in einem Lager und weist die folgenden Schritte auf:
- Erfassen von Bilddaten mit einer 3D-Kamera, die an einem Flurförderzeug befestigt ist, so dass eine Blickrichtung der 3D-Kamera einen definierten Winkel zur Horizontalen aufweist, wobei die 3D-Kamera einen Bildsensor mit matrixartig angeordneten Sensorelementen aufweist und die Bilddaten eine Vielzahl von Bildpunkten umfassen, wobei jedem Bildpunkt ein Farbwert und eine Entfernungsinformation zugeordnet ist,
- Segmentieren der Bilddaten in zusammenhängende Segmente auf Grundlage der Farbwerte,
- Berechnen von Segmentattributen für jedes Segment,
- Klassifizieren der Segmente auf Grundlage der Segmentattribute,
- Erkennen eines Objekts des Lagers auf Grundlage der Klassifizierung.

Hinsichtlich der Erfassung der Bilddaten wird auf die vorstehenden Erläuterungen verwiesen. Ein Unterschied besteht darin, dass nunmehr zusätzlich zu der zu jedem Bildpunkt zugehörigen Entfernungsinformation auch ein Farbwert für jeden Bildpunkt erfasst wird.

Nach dem Erfassen der Bilddaten werden diese auf Grundlage der Farbwerte in zusammenhängende Segmente segmentiert. Die einzelnen Segmente umfassen Bildpunkte, die in einem logischen Zusammenhang stehen. Für die Segmentierung kann beispielsweise der bekannte Felzenszwalb-Huttenlocher-Algorithmus verwendet werden.

Anschließend werden für jedes Segment Segmentattribute berechnet, welche dann die Grundlage für eine Klassifizierung der Segmente bilden. Die Erkennung eines Objekts des Lagers erfolgt dann auf Grundlage der Klassifizierung.

Auch dieses Verfahren ermöglicht, einzelne Objekte des Lagers zu erkennen oder sich auf Grundlage der erkannten Objekte in dem Lager räumlich zu orientieren. Durch die ganz zu Beginn der Auswertung stehende Segmentierung der Bilddaten vereinfachen sich die nachfolgenden Auswertungsschritte, was das Verfahren zum Einsatz in Verbindung mit einem Flurförderzeug besonders praxistauglich macht.

In einer Ausgestaltung werden als Segmentattribute eine oder mehrere der folgenden Eigenschaften verwendet: Abmessungen, durchschnittlicher Farbwert, Anzahl der Bildpunkte, relative Tiefeninformation. Zur Berechnung der Abmessungen der Segmente muss zunächst die Ausrichtung des betreffenden Segments ermittelt werden. Hierzu kann beispielsweise die größte Fläche des Segments als Vorderseite definiert werden. Diese Definition kann aufgrund einer Auswertung der häufigsten Normalenrichtungen der zu dem Segment gehörigen Bildpunkte bzw. von diesen repräsentierten Flächen erfolgen, wie im Zusammenhang mit dem ersten erfindungsgemäßen Verfahren ausführlich erläutert. Um den Rechenaufwand gering zu halten, kann wiederum mit Bildelementen gearbeitet werden, die mehrere der erfassten Bildpunkte repräsentieren, beispielsweise wieder durch Mittelwertbildung.

Die zur Einteilung der erfassten Bildpunkte verwendete Aufteilung des gesamten Bildvolumens kann wiederum durch gleich große Quader erfolgen, beispielsweise mit einer gleichmäßigen Kantenlänge von etwa 5 cm. Die Abmessungen können in drei Dimensionen erfasst werden, wobei jedes Segment beispielsweise als quaderförmig approximiert werden kann. Die relative Tiefeninformation kann aus der Differenz aus einem in Blickrichtung zu dem Objekt (d.h. im gleichen Winkel um eine vertikale Achse herum) am weitesten von der 3D-Kamera entfernten Objekt (beispielsweise einer Wandfläche) und dem Abstand des Objekts von der 3D-Kamera berechnet werden. Diese relative Tiefeninformation ermöglicht eine einfache Auswertung der Vor/Hinter-Beziehung zwischen unterschiedlichen Segmenten.

Ebenso wie die Abmessungen können auch die durchschnittlichen Farbwerte einzelner Segmente wichtige Hinweise auf das von dem betreffenden Segment repräsentierte Objekt geben. Beispielsweise weisen Paletten in der Regel eine grau-braune Farbe auf, während Regalträger ebenfalls in einer typischen Farbe lackiert sind. Somit gibt auch das Segmentattribut "durchschnittlicher Farbwert" wichtige Hinweise für die richtige Klassifizierung der Segmente. Die Anzahl der Bildpunkte eines Segments ist ebenfalls für die richtige Klassifizierung von Bedeutung. Insbesondere in Verbindung mit einer gleichzeitigen Ermittlung des Segmentattributs "Abmessungen" kann die Anzahl der Bildpunkte Aufschluss über die Geschlossenheit von Flächen geben.

In einer Ausgestaltung wird zum Klassifizieren eine "Support Vector Machine" verwendet. Eine Support Vector Machine ist ein Computerprogramm, das zur Klassifizierung von Objekten auf Grundlage eines maschinellen Lernvorgangs eingesetzt wird. Jedes zu klassifizierende Objekt wird durch einen Vektor in einem Vektorraum repräsentiert. Bei der Erfindung sind die zu klassifizierenden Objekte die Segmente, die jeweils durch einen Vektor beschrieben werden. Der Vektor enthält alle dem betreffenden Segment zugeordneten Segmentattributen. Zum "Einlernen" der Support Vector Machine werden Trainingsobjekte verwendet, die vorgegebenen Klassen angehören. Hierzu können beispielsweise in einem mit der 3D-Kamera erfassten Datensatz die bekannten Objekte manuell den vorgesehenen Klassen zugeordnet werden. Auf Grundlage solcher Trainingsdatensätze erlernt die Support Vector Machine die richtige Klassifizierung der Segmente. Ergebnis ist eine zuverlässige Klassifizierung mit relativ geringem Rechenaufwand und eine fortlaufende Optimierung der verwendeten Klassen, ohne dass hierzu umfangreiche theoretische Überlegungen zu den einzelnen Segmentattributen der vorgesehenen Klassen angestellt werden müssten. Dadurch ist das Verfahren besonders einfach und passt sich automatisch den jeweiligen Gegebenheiten an. Zu diesen Gegebenheiten zählen Eigenschaften typischer Lager, die vielen Lagern gemeinsam sind - etwa die Anwesenheit vertikaler Regalträger - aber auch lagerindividuelle Gegebenheiten, beispielsweise die Beleuchtungssituation.

In einer Ausgestaltung werden beim Klassifizieren der Segmente eine oder mehrere der folgenden Klassen berücksichtigt: Vertikale Regalträger, horizontale Regalträger, Schilder, Transportboxen, Wände, Paletten. Insbesondere können alle diese Klassen berücksichtigt werden und somit die Gesamtheit der in einem typischen Lager vorhandenen Objekte weitgehend vollständig klassifiziert werden.

In einer Ausgestaltung werden übereinanderliegende Segmente, die als vertikale Regalträger klassifiziert wurden, und/oder nebeneinander liegende Segmente, die als horizontale Regalträger klassifiziert wurden, zu jeweils einer Segmentgruppe zusammengefasst. Mit übereinander liegenden Segmenten sind Segmente gemeint, die an der gleichen seitlichen Position im Lager, jedoch auf unterschiedlicher Höhe angeordnet sind. Entsprechend sind mit nebeneinander liegenden Segmenten Segmente gemeint, die sich auf gleicher Höhe befinden, jedoch einen seitlichen Abstand voneinander aufweisen. Die auf diese Weise gebildeten Segmentgruppen repräsentieren die Gesamtheit eines horizontalen oder eines vertikalen Regalträgers, auch wenn dieser nur stückweise erkannt wurde. Ebenfalls möglich ist, die so gebildeten Segmentgruppen zu erweitern, und zwar um nicht als vertikale oder horizontale Regalträger klassifizierte Segmente, die sich zwischen zwei als solche klassifizierten Segmenten befinden. In diesem Fall umfassen die Segmentgruppen dann jeweils die Gesamtheit eines horizontalen oder eines vertikalen Regalträgers.

In einer Ausgestaltung wird ein Segment als Palette erkannt, wenn die folgenden Kriterien erfüllt sind:
- das Segment wurde mit einer Mindestwahrscheinlichkeit als Palette klassifiziert und/oder
- ein Mittelpunkt des Segments befindet sich innerhalb eines vorgegebenen Höhenbereichs oberhalb eines horizontalen Regalträgers und innerhalb eines vorgegebenen Entfernungsbereichs hinter dessen Vorderkante und/oder
- ein Vergleich der Vorderseite des Segments mit einem vordefinierten Muster einer Palette ergibt eine Mindestübereinstimmung.

Insbesondere kann ein Segment nur dann als Palette erkannt werden, wenn alle drei Kriterien erfüllt sind. Bei den Kriterien handelt es sich um eine Art Plausibilitätsbewertung für die Erkennung einer Palette. Berücksichtigt wird die Klassifizierung des betreffenden Segments, aber auch die Anordnung des Segments relativ zu einem horizontalen Regalträger und ggfs. zusätzlich die Übereinstimmung einer Vorderseite des Segments mit einem vordefinierten Muster. Zu den hier einsetzbaren Methoden der Mustererkennung wird auf die vorstehenden Erläuterungen verwiesen, die entsprechend gelten. Insgesamt wird durch die Einhaltung der Kriterien eine besonders hohe Wahrscheinlichkeit dafür erreicht, dass ein als Palette erkanntes Segment tatsächlich eine Palette repräsentiert.

In einer Ausgestaltung wird ein freier Lagerplatz erkannt, wenn in einem definierten Raumbereich oberhalb eines Objekts, das als horizontaler Regalträger erkannt oder klassifiziert wurde, keine Bildpunkte bzw. Segmente vorhanden sind. Auf diese Weise können auf Grundlage jedes der beiden erfindungsgemäßen Verfahren freie Lagerplätze ausfindig gemacht werden.

In einer Ausgestaltung werden die Abmessungen einer Last ermittelt durch Auswerten der oberhalb eines als Palette erkannten Objekts erfassten Bildpunkte bzw. Segmente. Insbesondere können alle erfassten Bildpunkte bzw. Segmente berücksichtigt werden, die unterhalb eines über der Palette erkannten, horizontalen Regalträgers angeordnet sind. Die Abmessungen der Last können wiederum durch einen Quader, der alle oberhalb der Palette erfassten Bildpunkte einschließt, angenähert werden.

In einer Ausgestaltung weist das Flurförderzeug ein Navigationssystem auf, das Positionsdaten für die Position des Flurförderzeugs im Lager zur Verfügung stellt, und die Positionsdaten werden unter Berücksichtigung einer erkannten Hauptebene und/oder eines erkannten Objekts angepasst. Grundsätzlich kann durch das erfindungsgemäße Verfahren allein eine Orientierung im Raum errichtet werden, sodass ein herkömmliches Navigationssystem nicht benötigt wird. In der genannten Ausgestaltung wird das Verfahren jedoch mit einem solchen Navigationssystem kombiniert. Dann kann jedes der erfindungsgemäßen Verfahren zur Verfeinerung der Positionsdaten, die mit dem herkömmlichen Navigationssystem erfasst wurden, herangezogen werden. Das herkömmliche Navigationssystem kann beispielsweise eine Ortung der Position des Flurförderzeugs über Funk oder mittels eines oder mehrerer Laserscanner oder mittels Odometrie zur Verfügung stellen. Unter Berücksichtigung der Hauptebenen und/oder Objekte können die von einem solchen System zur Verfügung gestellten Positionsdaten korrigiert und unter Umständen wesentlich präziser gemacht werden.

In einer Ausgestaltung ist die 3D-Kamera eine Time-of-Flight-Kamera oder ein Kamerasystem, das ein definiertes Muster auf das Bildfeld projiziert und abbildet und aus einer Verschiebung des Musters die Entfernungsinformationen ermittelt. Time-of-Flight-Kameras sind zur Erfassung dreidimensionaler Bilddaten bekannt. Sie beleuchten das Bildfeld mit einer modulierten Lichtintensität, insbesondere im Infrarotbereich, und werten eine Phasenverschiebung der von den im Bildbereich befindlichen Objekten reflektierten Lichtsignale aus. Diese Phasenverschiebung entsteht durch unterschiedliche Laufzeiten des Lichts auf dem Weg von der in die 3D-Kamera integrierten oder nahe der 3D-Kamera angeordneten Lichtquelle zu den reflektierenden Gegenständen und zurück. Ein bekanntes Kamerasystem, das auf Grundlage eines projizierten Musters Entfernungsinformationen gewinnt, ist das Kinect-System von Microsoft. Es kombiniert eine zweidimensionale VGA-Kamera mit einem Entfernungsmesssystem, das auf dem Triangulationsprinzip beruht.

Die oben angegebene Aufgabe wird ebenfalls gelöst durch ein Flurförderzeug mit den Merkmalen des Anspruchs 9. Das Flurförderzeug weist eine Einrichtung zur Erkennung von Objekten in einem Lager und/oder zur räumlichen Orientierung in einem Lager auf, wobei die Einrichtung folgendes umfasst:
- eine 3D-Kamera zur Erfassung von Bilddaten, wobei die 3D-Kamera an dem Flurförderzeug befestigt ist, so dass eine Blickrichtung der 3D-Kamera einen definierten Winkel zur Horizontalen aufweist, einen Bildsensor mit matrixartig angeordneten Sensorelementen aufweist und die Bilddaten eine Vielzahl von Bildpunkten umfassen, denen jeweils eine Entfernungsinformation zugeordnet ist,
- eine Auswerteeinrichtung zur Auswertung der Bilddaten, die dazu ausgebildet ist, für eine Vielzahl von Bildelementen Winkelangaben zu berechnen, die jeweils einen Winkel zwischen einer von dem Bildelement repräsentierten Fläche und einer vertikalen Referenzebene angeben, auf Grundlage der Häufigkeiten der berechneten Winkelangaben eine Vorzugsrichtung festzulegen, Positionen der erfassten Bildpunkte entlang der Vorzugsrichtung zu berechnen und mindestens eine Hauptebene des Lagers auf Grundlage einer Häufigkeitsverteilung der berechneten Positionen zu erkennen.

Zur Erläuterung wird auf die vorstehenden Erläuterungen zu dem korrespondierenden Verfahren verwiesen. Das Flurförderzeug ist zur Ausführung dieses Verfahrens eingerichtet. Es versteht sich, dass auch alle vorstehend erläuterten Besonderheiten des Verfahrens in Verbindung mit dem erfindungsgemäßen Flurförderzeug eingesetzt werden können. Hierzu kann insbesondere die Auswerteeinrichtung zur Ausführung der Verfahrensschritte eines oder mehrerer der Unteransprüche 2 bis 8 ausgebildet sein.

Die oben angegebene Aufgabe wird außerdem gelöst durch das nachfolgend beschriebene, nicht beanspruchte Flurförderzeug. Das Flurförderzeug weist eine Einrichtung zur Erkennung von Objekten in einem Lager und/oder zur räumlichen Orientierung in einem Lager auf, wobei die Einrichtung folgendes umfasst:
- eine 3D-Kamera zur Erfassung von Bilddaten, wobei die 3D-Kamera an dem Flurförderzeug befestigt ist, so dass eine Blickrichtung der 3D-Kamera einen definierten Winkel zur Horizontalen aufweist, einen Bildsensor mit matrixartig angeordneten Sensorelementen aufweist und die Bilddaten eine Vielzahl von Bildpunkten umfassen, denen jeweils ein Farbwert und eine Entfernungsinformation zugeordnet ist,
- eine Auswerteeinrichtung zur Auswertung der Bilddaten, die dazu ausgebildet ist, die Bilddaten auf Grundlage der Farbwerte in zusammenhängende Segmente zu segmentieren, für jedes der Segmente Segmentattribute zu berechnen, die Segmente auf Grundlage der Segmentattribute zu klassifizieren und ein Objekt des Lagers auf Grundlage der Klassifizierung zu erkennen.

Zur Erläuterung wird auf die vorstehenden Erläuterungen zu dem korrespondierenden Verfahren verwiesen. Das Flurförderzeug ist zur Ausführung dieses Verfahrens eingerichtet. Es versteht sich, dass auch alle vorstehend erläuterten Besonderheiten des Verfahrens in Verbindung mit dem erfindungsgemäßen Flurförderzeug eingesetzt werden können.

Nachfolgend wird die Erfindung anhand von zwei in mehreren Figuren dargestellten Ausführungsbeispielen näher erläutert. Es zeigen:
- Fig. 1: eine schematische Darstellung eines Lagers von oben,
- Fig. 2: eine Veranschaulichung einer Punktwolke,
- Fig. 3: ein Histogramm für Winkelangaben von Bildelementen,
- Fig. 4: ein Histogramm der Positionen der erfassten Bildpunkte entlang einer Vorzugsrichtung,
- Fig. 5: ein weiteres Histogramm der Positionen der erfassten Bildpunkte entlang einer Vorzugsrichtung für einen anderen Bilddatensatz,
- Fig. 6: eine zweidimensionale Darstellung der in einer Umgebung einer Regalfrontebene erfassten Bildpunkte,
- Fig. 7: ein vordefiniertes Muster, das einen horizontalen Regalträger repräsentiert,
- Fig. 8: ein vordefiniertes Muster, das einen vertikalen Regalträger repräsentiert,
- Fig. 9: ein vordefiniertes Muster, das eine Palette repräsentiert,
- Fig. 10: ein Diagramm zu den Ergebnissen eines Vergleichs der Daten aus Figur 6 mit dem vordefinierten Muster aus Figur 7,
- Fig. 11: ein Diagramm zu den Ergebnissen eines Vergleichs der Daten aus Figur 6 mit dem vordefinierten Muster aus Figur 8,
- Fig. 12: ein Diagramm zu den Ergebnissen eines Vergleichs der Daten aus Figur 6 mit dem vordefinierten Muster aus Figur 9,
- Fig. 13: eine Darstellung zu in eine Vielzahl von Segmenten unterteilten Bilddaten,
- Fig. 14: eine schematische Darstellung zur Ermittlung der Abmessungen eines Segments,
- Fig. 15: eine schematische Darstellung zur Definition einer relativen Tiefeninformation,
- Fig. 16: die in Fig. 13 dargestellten Bilddaten nach einer Klassifizierung.

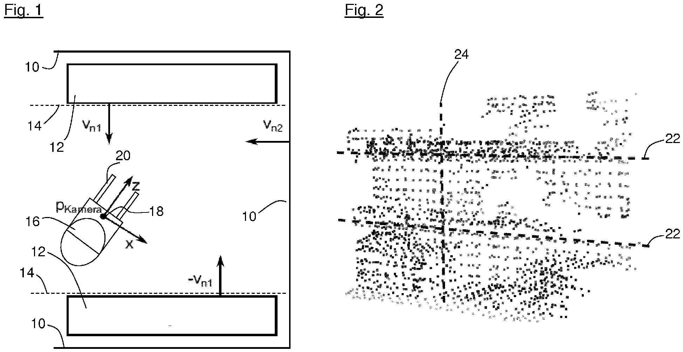

Figur 1 zeigt eine schematische Ansicht auf ein typisches Regallager von oben. Das Lager umfasst drei rechtwinklig zueinander und vertikal ausgerichtete Wandflächen 10. Vor zwei der Wandflächen 10, die einander gegenüberliegen, befinden sich jeweils ein Regal 12. Die von den Wandflächen 10 entfernten Vorderseiten der Regale 12 befinden sich jeweils in einer Regalfrontebene 14.

Das Lager wird mit einem Flurförderzeug 16 bewirtschaftet, das eine 3D-Kamera 18 aufweist. Die 3D-Kamera 18 ist an dem Flurförderzeug 16 so befestigt, dass ihre Blickrichtung einen definierten Winkel zur Horizontalen aufweist. Entsprechend der Blickrichtung der 3D-Kamera 18 ausgerichtet ist ein in der Figur 1 angedeutetes Koordinatensystem, dessen z-Achse in Blickrichtung der 3D-Kamera 18 weist. Die x-Achse dieses Koordinatensystems weist in Blickrichtung der 3D-Kamera nach rechts, die nicht dargestellte y-Achse nach unten. Das Flurförderzeug 16 weist eine Hauptfahrtrichtung in Richtung zu dem angedeuteten Lasttragmittel 20 hin auf, die mit der z-Achse und der Blickrichtung der 3D-Kamera 18 übereinstimmt.

Figur 2 zeigt beispielhaft einen mit der 3D-Kamera 18 erfassten Bilddatensatz nach Anwendung eines Voxelgridfilters (siehe unten). Dieser ist eine Punktwolke mit einer Vielzahl von erfassten Bildpunkten, denen jeweils drei Koordinaten zugeordnet sind, sodass die Position jedes einzelnen erfassten Bildpunkts im Raum bekannt ist. Figur 2 zeigt eine perspektivische Darstellung der Punktwolke, sodass die den einzelnen Bildpunkten zugeordnete Tiefeninformation nur erahnt werden kann. Man erkennt jedoch bereits beim Betrachten der Punktwolke in dieser perspektivischen Darstellung, dass die erfassten Bildpunkte entlang der gestrichelt hervorgehobenen Linien 22, 24 gehäuft sind. Die Linien 22 kennzeichnen den Verlauf von zwei horizontalen Regalträgern, die Linie 24 kennzeichnet den Verlauf eines vertikalen Regalträgers.

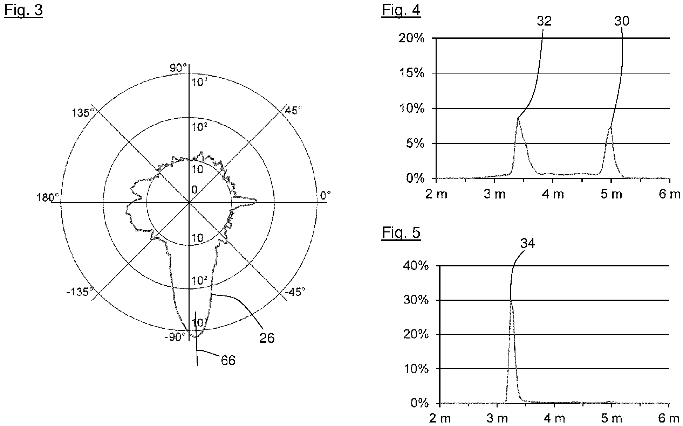

Ein erstes erfindungsgemäßes Verfahren zur Auswertung der Bilddaten wird anhand der Figuren 3 bis 12 näher erläutert. Zunächst wird das Volumen, in dem die erfassten Bildpunkte angeordnet sind, in eine Vielzahl gleich großer Quader eingeteilt. Beispielsweise können Quader mit einer gleichmäßigen Kantenlänge von 20 cm verwendet werden. Die innerhalb jedes der Quader erfassten Bildpunkte werden gemittelt und stellen für einen Teil der nachfolgenden Auswertung nur noch ein einziges Bildelement dar.

Anschließend wird zu jedem der Bildelemente eine Winkelangabe berechnet, die einen Winkel zwischen einer von dem Bildelement repräsentierten Fläche und einer vertikalen Referenzebene angibt. Die vertikale Referenzebene kann beispielsweise die y-z-Ebene des in der Figur 1 angedeuteten Koordinatensystems sein. Um diese Winkelangabe zu berechnen, kann zunächst unter Berücksichtigung der benachbarten Bildelemente für jedes Bildelement ein Normalenvektor berechnet werden. Der Winkel zwischen diesem Normalenvektor und der Referenzebene ist die benötigte Winkelangabe.

Figur 3 zeigt ein Histogramm, in das die Winkelangaben für alle Bildelemente einsortiert sind. Die 0°-Position rechts im Diagramm entspricht der Blickrichtung der 3D-Kamera 18. Die Winkeleinteilung läuft kreisförmig um einen Mittelpunkt des Diagramms um. Der Abstand der dargestellten Kurve 26 vom Mittelpunkt des Diagramms gibt die Häufigkeit der einzelnen Winkelangaben an. Dargestellt ist das Histogramm nach einer Glättung. Man erkennt ein deutlich ausgeprägtes Maximum nahe der -90°-Position.

Die Bilddaten enthalten also besonders viele Bildelemente, deren Normalenvektoren diesen Winkel zu der Referenzebene aufweisen. Das Maximum des Histogramms kennzeichnet somit eine Vorzugsrichtung 66 in den erfassten Bilddaten. Da die 0°-Richtung der Blickrichtung der 3D-Kamera entspricht, heißt dies, dass besonders viele Bildelemente erfasst wurden, die etwa senkrecht zur Blickrichtung der Kamera ausgerichtet sind. Mit anderen Worten blickt die 3D-Kamera 18 im dargestellten Beispiel etwa frontal auf relativ großflächige Strukturen, etwa auf eine Wandfläche oder eine Regalfrontebene.

Nach Ermitteln der Vorzugsrichtung 66 auf Grundlage der in der Figur 3 dargestellten Daten wird bei dem ersten erfindungsgemäßen Verfahren eine weitere Auswertung auf Grundlage der ursprünglich erfassten Bilddaten (wie dargestellt in Fig. 2) ausgeführt. Es werden für jeden der erfassten Bildpunkte Positionen entlang der Vorzugsrichtung 66 berechnet. Diese Positionen können beispielsweise die Abstände zur 3D-Kamera 18 gemessen entlang der Vorzugsrichtung 66 angeben. Auch eine andere, senkrecht zur Vorzugsrichtung 66 stehende Bezugsebene kann als Ursprung für diese Positionsbestimmung verwendet werden.

Die auf diese Weise berechneten Positionen der erfassten Bildpunkte entlang der Vorzugsrichtung 66 sind in den Figuren 4 und 5 in weiteren Histogrammen veranschaulicht. Am Beispiel der Figur 4 erkennt man zwei deutlich ausgeprägte Maxima 30, 32, die sich in Abständen von etwa 3,5 m und etwa 5 m von der 3D-Kamera 18 befinden. Es fällt auf, dass unter Berücksichtigung einer Toleranz keine Bildpunkte in noch größerem Abstand als das erste Maximum 30 bei etwa 5 m verzeichnet sind. Dies deutet darauf hin, dass es sich bei dem ersten Maximum 30 um eine Wandebene handelt. Das zweite Maximum 32 befindet sich in Vorzugsrichtung 66 etwa 1,5 m näher an der 3D-Kamera 18 als das erste Maximum 30. Dies deutet darauf hin, dass es sich bei dem zweiten Maximum 32 um eine Regalfrontebene 14 eines Regals 12 handelt, das vor der Wandfläche 10 steht.

Figur 5 zeigt ein anderes Beispiel, bei dem nur ein einziges Maximum an einer dritten Position von etwa 3,3 m angeordnet ist. Bei größeren Abständen befinden sich im Unterschied zu dem ersten Maximum 30 der Figur 4 jedoch eine gewisse Anzahl weiterer erfasster Bildpunkte. Dies kann so interpretiert werden, dass das einzige Maximum 34 ebenfalls eine Regalfrontebene 14 ist, das zugehörige Regal 12 jedoch nicht vor einer Wandfläche 10 aufgestellt ist oder die Wandfläche 10 nicht durch das Regal 12 hindurch sichtbar ist.

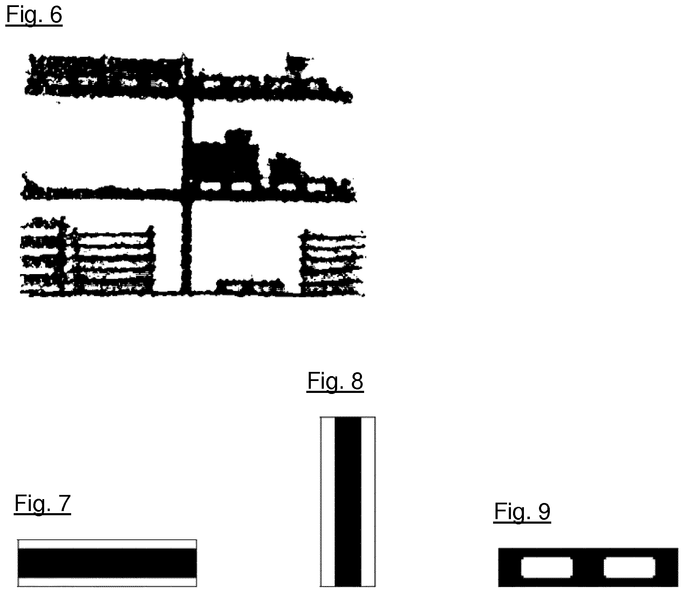

In einem nächsten Auswertungsschritt werden die in einer Umgebung einer Hauptebene erfassten Bildpunkte auf diese Hauptebene projiziert, und zwar vorzugsweise entlang der Vorzugsrichtung 66. Das Ergebnis am Beispiel einer Regalfrontebene 14 zeigt die Figur 6. Nach der Projektion sind die Daten zweidimensional. Dunkle Bildpunkte bedeuten, dass an der betreffenden Position in der Umgebung der Regalfrontebene 14 mindestens ein Bildpunkt erfasst wurde. Die weitere Auswertung kann anhand dieser projizierten, zweidimensionalen Daten erfolgen, was den Rechenaufwand erheblich verringert.

Hierzu wird bei dem ersten erfindungsgemäßen Verfahren ein Vergleich der projizierten, zweidimensionalen Daten aus Figur 6 mit vordefinierten Mustern durchgeführt. Die Figuren 7 bis 9 zeigen drei solche vordefinierten Muster, nämlich Fig. 7 ein Muster eines horizontalen Regalträgers, Fig. 8 ein Muster eines vertikalen Regalträgers und Fig. 9 ein Muster einer Palette. Diese vordefinierten Muster werden mit den Bilddaten der Figur 6 verglichen, indem sie an unterschiedlichen Positionen über die Bilddaten gelegt und die Anzahl der übereinstimmenden Bildpunkte ermittelt werden. Insbesondere können die vordefinierten Muster mit ihren Mittelpunkten an die Position jedes einzelnen Bildpunkts der Figur 6 (mit Ausnahme eines Randbereichs) gelegt werden.

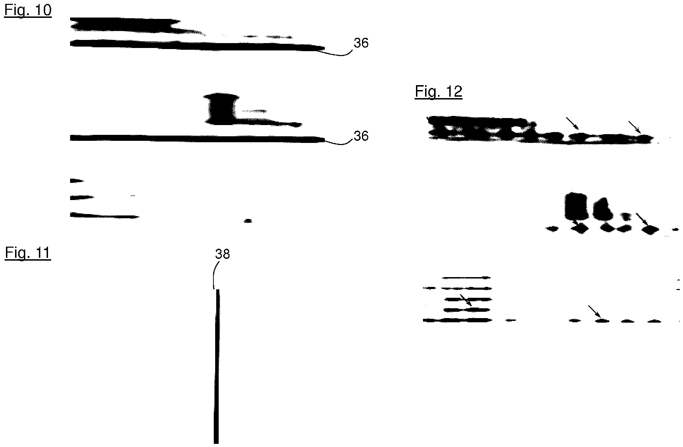

Die Ergebnisse eines solchen Vorgehens sind in den Figuren 10 bis 12 dargestellt. Die in diesen Figuren dunkel erscheinenden Punkte zeigen Positionen der vordefinierten Muster relativ zu den Bilddaten an, an denen die Übereinstimmung besonders groß ist. Man erkennt in der Figur 10, die den Vergleich mit dem Muster der Figur 7 zeigt, dass kurz unterhalb des oberen Bildrands sowie etwa in der Mitte des Bilds ausgeprägte, horizontal verlaufende dunkle Streifen 36 angeordnet sind. Diese sind auf horizontale Regalträger zurückzuführen. Figur 11 stellt die Ergebnisse des Vergleichs mit dem Muster der Figur 8 dar. Auffällig ist ein etwas rechts der Bildmitte angeordneter, vertikal verlaufender dunkler Streifen 38, der die Position eines vertikalen Regalträgers angibt.

Figur 12 zeigt die Ergebnisse des Vergleichs mit dem Muster der Figur 9. Punkte mit besonders hoher Übereinstimmung mit dem eine Palette repräsentierenden Muster der Figur 9 sind durch kleine Pfeile hervorgehoben. Ein aufmerksamer Betrachter erkennt durch Vergleich mit der Figur 6, dass es sich bei allen im oberen und rechten Bildbereich befindlichen Pfeilen tatsächlich um die Mittelpunkte der in der Figur 6 erkennbaren Paletten handelt. Der Pfeil links unten befindet sich jedoch nicht an der Position einer Palette der Figur 6, sondern ist offenbar auf eine zufällige Übereinstimmung der in diesem Bildbereich erfassten Strukturen mit dem Muster der Figur 9 zurückzuführen.

Um im weiteren Verfahren die Erkennung einer Palette an dieser Position zu vermeiden, kann eine Plausibilitätskontrolle vorgenommen werden. Beispielsweise kann als weiteres Kriterium gefordert werden, dass als Palette zu erkennende Objekte innerhalb eines bestimmten Abstands oberhalb eines horizontalen Regalträgers oder des Bodens angeordnet sind. Dieses Kriterium wäre an der Position des in der Figur 12 unten links dargestellten Pfeils nicht erfüllt, sodass die zufällige Übereinstimmung der dort erfassten Strukturen nicht zum Erkennen einer Palette führt.

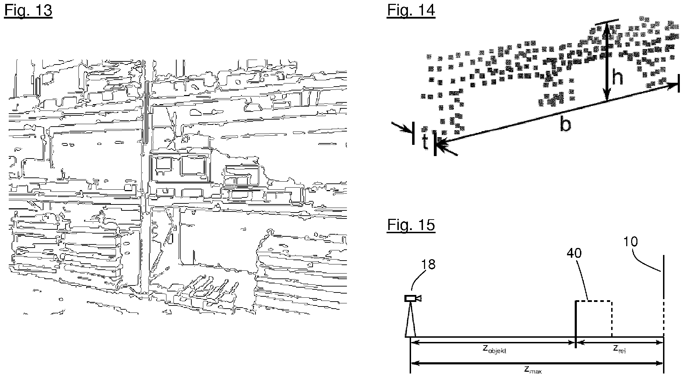

Ein zweites erfindungsgemäßes Verfahren wird anhand der Figuren 13 bis 16 erläutert. Ausgangspunkt der Auswertung ist wiederum ein von der 3D-Kamera 18 zur Verfügung gestellter Bilddatensatz, wobei bei diesem Verfahren jedem erfassten Bildpunkt nicht nur seine dreidimensionalen Koordinaten zugeordnet sind, sondern zusätzlich auch ein Farbwert. Entsprechende Bilddaten stellt beispielsweise die bereits erwähnte Microsoft Kinect-Kamera zur Verfügung. Als erster Auswertungsschritt erfolgt eine Segmentierung der Bilddaten auf Grundlage dieser Farbwerte. Hierzu wird ein Felzenszwalb-Huttenlocher-Algorithmus verwendet, der auf den Farben der Punktwolke operiert. Auf diese Weise werden die erfassten Bildpunkte in eine Vielzahl von Segmenten unterteilt, wobei es zwischen den erfassten Bildpunkten jedes Segments einen logischen Zusammenhang gibt. In der Figur 13 sind anstelle einer zu Darstellungszwecken üblichen Farbdarstellung nur die Konturen zwischen benachbarten Segmenten dargestellt.

Nachfolgend werden für jedes Segment Segmentattribute berechnet. Hierzu können beispielsweise die Abmessungen des Segments in drei Dimensionen zählen. Diese können auf Grundlage der zu dem Segment gehörigen Bildpunkte berechnet werden, wie in der Figur 14 dargestellt. Dabei kann beispielsweise ein Quader berechnet werden, in dem sämtliche zu dem Segment gehörigen Bildpunkte liegen. Auf diese Weise erhält man zu dem Segment eine Breite b, eine Höhe h und eine Tiefe t.

Ein weiteres, für die spätere Klassifizierung hilfreiches Segmentattribut ist eine relative Tiefeninformation. Diese wird anhand der Figur 15 erläutert. Erkennbar ist links die 3D-Kamera 18 und ganz rechts eine Wandfläche 10. Zwischen den beiden befindet sich ein Objekt 40, das als ein Segment repräsentiert ist. Der Abstand zwischen 3D-Kamera 18 und Wandfläche 10 ist als zₘₐₓ bezeichnet. Der Abstand zwischen 3D-Kamera 18 und Objekt 40 ist als z_{objekt} bezeichnet. Die relative Tiefeninformation ist als zᵣₑₗ bezeichnet und ergibt sich als Differenz zₘₐₓ - z_{Objekt.}

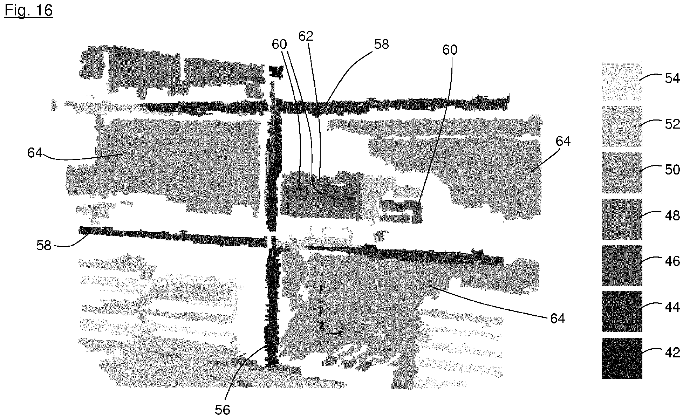

Nach dem Berechnen der Segmentattribute für jedes Segment erfolgt eine Klassifizierung der Segmente mit Hilfe einer Support Vector Machine. Das Ergebnis dieser Klassifizierung ist in der Figur 16 dargestellt, in der die identifizierten Klassen durch unterschiedliche Grauwerte veranschaulicht werden. Die dunkelste Graustufe 42 entspricht der Klasse vertikaler Regalträger. Die als solche klassifizierten Segmente bilden in der Figur 16 einen vertikalen Streifen 56.

Die zweitdunkelste Graustufe 44 veranschaulicht die Klasse horizontaler Regalträger. Die als solche klassifizierten Segmente befinden sich in zwei in der Figur 16 (unter Berücksichtigung der perspektivischen Darstellung) horizontal verlaufenden Streifen 58.

Die drittdunkelste Graustufe 46 entspricht der Klasse Schild. Als solche erkannte Segmente 60 befinden sich vor allem oberhalb des unteren horizontalen Regalträgers und rechts des vertikalen Regalträgers. Sie befinden sich an der Frontseite weiterer Segmente 62, die als Transportboxen klassifiziert wurden, repräsentiert durch die nächsthellere Graustufe 48.

Eine weitere, in der Figur 16 dargestellte Graustufe 50 entspricht der Klasse Wandfläche. Entsprechende Segmente 64 sind insbesondere innerhalb der zwischen den einzelnen Regalträgern ausgebildeten Regalfächer erkennbar.

Eine nochmals hellere Graustufe 52 steht für die Klasse Paletten und findet sich in der Figur 16 vorwiegend unterhalb der als Transportboxen klassifizierten Segmente 62. Die Legende umfasst noch eine weitere Graustufe 54, die für eine an dieser Stelle nicht weiter erläuterte Klasse steht.

## Patentansprüche

1. Verfahren zur Erkennung einer Hauptebene eines Lagers mit den folgenden Schritten:
• Erfassen von Bilddaten mit einer 3D-Kamera (18), die an einem Flurförderzeug (16) befestigt ist, so dass eine Blickrichtung der 3D-Kamera (18) einen definierten Winkel zur Horizontalen aufweist, wobei die 3D-Kamera (18) einen Bildsensor mit matrixartig angeordneten Sensorelementen aufweist und die Bilddaten eine Vielzahl von Bildpunkten umfassen, wobei jedem Bildpunkt eine Entfernungsinformation zugeordnet ist
**gekennzeichnet durch**
• Berechnen von Winkelangaben für eine Vielzahl von Bildelementen, wobei jedes Bildelement aus einer Vielzahl rechnerisch zusammengefasster Bildpunkte besteht und eine Fläche repräsentiert und die Winkelangaben jeweils einen Winkel zwischen einer von dem Bildelement repräsentierten Fläche und einer vertikalen Referenzebene angeben,
• Festlegen einer Vorzugsrichtung (66) auf Grundlage der Häufigkeiten der berechneten Winkelangaben, so dass die Vorzugsrichtung einer Winkelangabe entspricht, die eine maximale Häufigkeit aufweist,
• Berechnen der Positionen der erfassten Bildpunkte entlang der Vorzugsrichtung (66), wobei die Positionen Abständen der erfassten Bildpunkte von einer gedachten, senkrecht auf die Vorzugsrichtung stehenden Ebene entsprechen,
• Erkennen einer Hauptebene des Lagers auf Grundlage einer Häufigkeitsverteilung der berechneten Positionen, wobei die Hauptebene senkrecht zu der Vorzugsrichtung ausgerichtet und an einer Position angeordnet ist, an der die Häufigkeitsverteilung ein Maximum aufweist.

2. Verfahren nach Anspruch 1, **dadurch gekennzeichnet, dass** die Bildelemente, für die die Winkelangaben berechnet werden, jeweils durch eine Mittelung über alle in einem vorgegebenen Volumenelement enthaltenen Bildpunkte berechnet werden.

3. Verfahren nach Anspruch 1 oder 2, **dadurch gekennzeichnet, dass** eine der Hauptebenen eine Wandebene ist, die an einer ersten Position und senkrecht zu der Vorzugsrichtung (66) erkannt wird, wenn die Häufigkeitsverteilung an der ersten Position ein erstes Maximum (30) aufweist und die Anzahl von Bildpunkten mit weiter von der 3D-Kamera (18) entfernten Positionen geringer ist als ein vorgegebener erster Grenzwert.

4. Verfahren nach Anspruch 3, **dadurch gekennzeichnet, dass** eine der Hauptebenen eine Regalfrontebene (14) ist, die an einer zweiten Position und senkrecht zu der Vorzugsrichtung (66) erkannt wird, wenn die Häufigkeitsverteilung an der zweiten Position ein zweites Maximum (32) aufweist und die zweite Position um 0,9 m bis 1,7 m näher an der 3D-Kamera (18) angeordnet ist als die erste Position.

5. Verfahren nach einem der Ansprüche 1 bis 4, **dadurch gekennzeichnet, dass** eine der Hauptebenen eine Regalfrontebene (14) ist, die an einer dritten Position und senkrecht zu der Vorzugsrichtung (66) erkannt wird, wenn die Häufigkeitsverteilung nur ein einziges ausgeprägtes Maximum (34) aufweist, das an der dritten Position angeordnet ist, und die Anzahl von Bildpunkten mit weiter von der 3D-Kamera (18) entfernten Positionen größer ist als ein vorgegebener zweiter Grenzwert.

6. Verfahren nach einem der Ansprüche 1 bis 5, **gekennzeichnet durch** die weiteren Schritte:
• Projizieren der Bildpunkte, die in einer Umgebung einer erkannten Hauptebene liegen, auf diese Hauptebene, und
• Erkennen von Objekten des Lagers furch Vergleich der projizierten, zweidimensionalen Daten mit vordefinierten Mustern.

7. Verfahren nach einem der Ansprüche 1 bis 6, **dadurch gekennzeichnet, dass** das Flurförderzeug (16) ein Navigationssystem aufweist, das Positionsdaten für die Position des Flurförderzeugs (16) im Lager zur Verfügung stellt, und dass die Positionsdaten unter Berücksichtigung einer erkannten Hauptebene korrigiert werden.

8. Verfahren nach einem der Ansprüche 1 bis 7, **dadurch gekennzeichnet, dass** die 3D-Kamera (18) eine Time-of-Flight-Kamera ist oder ein Kamerasystem, das ein definiertes Muster auf das Bildfeld projiziert und abbildet und aus einer Verschiebung des Musters die Entfernungsinformationen ermittelt.

9. Flurförderzeug (16) mit einer Einrichtung zur Erkennung einer Hauptebene eines Lagers, wobei die Einrichtung Folgendes umfasst:
• eine 3D-Kamera (18) zur Erfassung von Bilddaten, wobei die 3D-Kamera (18) an dem Flurförderzeug befestigt ist, so dass eine Blickrichtung der 3D-Kamera (18) einen definierten Winkel zur Horizontalen aufweist, einen Bildsensor mit matrixartig angeordneten Sensorelementen aufweist und die Bilddaten eine Vielzahl von Bildpunkten umfassen, denen jeweils eine Entfernungsinformation zugeordnet ist
**gekennzeichnet durch**
• eine Auswerteeinrichtung zur Auswertung der Bilddaten, die dazu ausgebildet ist, für eine Vielzahl von Bildelementen Winkelangaben zu berechnen, wobei jedes Bildelement aus einer Vielzahl rechnerisch zusammengefasster Bildpunkte besteht und eine Fläche repräsentiert und
die Winkelangaben jeweils einen Winkel zwischen einer von dem Bildelement repräsentierten Fläche und einer vertikalen Referenzebene angeben; auf Grundlage der Häufigkeiten der berechneten Winkelangaben eine Vorzugsrichtung festzulegen, so dass die Vorzugsrichtung einer Winkelangabe entspricht, die eine maximale Häufigkeit aufweist; Positionen der erfassten Bildpunkte entlang der Vorzugsrichtung zu berechnen, wobei die Positionen Abständen der erfassten Bildpunkte von einer gedachten, senkrecht auf die Vorzugsrichtung stehenden Ebene entsprechen; und eine Hauptebene des Lagers auf Grundlage einer Häufigkeitsverteilung der berechneten Positionen zu erkennen, wobei die Hauptebene senkrecht zu der Vorzugsrichtung ausgerichtet und an einer Position angeordnet ist, an der die Häufigkeitsverteilung ein Maximum aufweist.

## Claims

1. A method for the detection of a main plane of a warehouse, having the following steps:
• acquiring image data with a 3D camera (18) which is fastened to an industrial truck (16) so that a viewing direction of the 3D camera (18) has a defined angle to the horizontal, wherein the 3D camera (18) has an image sensor with sensor elements arranged matrix-like and the image data comprise a plurality of pixels, wherein distance information is assigned to each pixel, **characterized by**
• calculating angle information for a plurality of image elements, wherein each image element consists of a plurality of mathematically combined pixels and represents a surface, and the angle information specifies in each case an angle between a surface represented by the image element and a vertical reference plane,
• determining a predominant direction (66) based on the frequencies of the calculated angle information, so that the predominant direction corresponds to angle information which has a maximum frequency,
• calculating the positions of the acquired pixels along the predominant direction (66), wherein the positions correspond to clearances of the acquired pixels from an imaginary plane that is perpendicular to the predominant direction,
• detecting a main plane of the warehouse based on a frequency distribution of the calculated positions, wherein the main plane is aligned perpendicular to the predominant direction and is arranged at a position, at which the frequency distribution has a maximum.

2. The method according to Claim 1, **characterized in that** the image elements, for which the angle information is calculated, are calculated in each case by averaging all pixels contained in a specified volume element.

3. The method according to Claim 1 or 2, **characterized in that** one of the main planes is a wall plane which is detected at a first position and perpendicular to the predominant direction (66), if the frequency distribution at the first position has a first maximum (30) and the number of pixels with positions further remote from the 3D camera (18) is less than a specified first limit value.

4. The method according to Claim 3, **characterized in that** one of the main planes is a shelf front plane (14) which is detected at a second position and perpendicular to the predominant direction (66), if the frequency distribution at the second position has a second maximum (32) and the second position is arranged closer to the 3D camera (18) by 0.9 m to 1.7 m than the first position.

5. The method according to any one of Claims 1 to 4, **characterized in that** one of the main planes is a shelf front plane (14) which is detected at a third position and perpendicular to the predominant direction (66), if the frequency distribution has only a single distinct maximum (34) that is arranged at the third position, and the number of pixels with positions further remote from the 3D camera (18) is greater than a specified second limit value.

6. The method according to any one of Claims 1 to 5, **characterized by** the further steps:
• projecting the pixels which lie in a surrounding area of a detected main plane onto this main plane, and
• detecting objects of the warehouse by comparing the projected, two-dimensional data with predefined templates.

7. The method according to any one of Claims 1 to 6, **characterized in that** the industrial truck (16) has a navigation system that provides position data for the position of the industrial truck (16) in the warehouse, and that the position data are corrected, taking account of a detected main plane.

8. The method according to any one of Claims 1 to 7, **characterized in that** the 3D camera (18) is a time-of-flight camera or a camera system that projects and maps a defined template on the image field, and establishes the distance information from a shift of the template.

9. An industrial truck (16) having an apparatus for the detection of a main plane of a warehouse, wherein the apparatus comprises the following:
• a 3D camera (18) for acquiring image data, wherein the 3D camera (18) is fastened to the industrial truck so that a viewing direction of the 3D camera (18) has a defined angle to the horizontal, an image sensor having sensor elements arranged matrix-like and the image data comprise a plurality of pixels, to each of which distance information is assigned, **characterized by**
• an evaluation apparatus for evaluating the image data that is designed to calculate angle information for a plurality of image elements, wherein each image element consists of a plurality of mathematically combined pixels and represents a surface, and the angle information indicates in each case an angle between a surface represented by the image element and a vertical reference plane; determining a predominant direction based on the frequencies of the calculated angle information, so that the predominant direction corresponds to angle information which has a maximum frequency; calculating positions of the acquired pixels along the predominant direction, wherein the positions correspond to clearances of the acquired pixels from an imaginary plane that is perpendicular to the predominant direction; and detecting a main plane of the warehouse based on a frequency distribution of the calculated positions, wherein the main plane is aligned perpendicular to the predominant direction and is arranged at a position, at which the frequency distribution has a maximum.

## Revendications

1. Procédé de détection d'un plan principal d'un entrepôt présentant les étapes suivantes :
• la saisie de données d'image avec une caméra 3D (18), qui est fixée à un chariot de manutention (16), de sorte qu'une direction de visée de la caméra 3D (18) présente un angle défini par rapport à l'horizontale, dans lequel la caméra 3D (18) comporte un capteur d'image doté d'éléments détecteurs disposés selon une matrice et les données d'image comprennent de multiples points d'image, dans lequel une information de distance est assignée à chaque point d'image,
**caractérisé par**
• le calcul des données angulaires de multiples éléments d'image, dans lequel chaque élément d'image est constitué de multiples points d'image regroupés par voie mathématique et représente une surface, tandis que les données angulaires indiquent respectivement un angle entre une surface représentée par l'élément d'image et un plan de référence vertical,
• la définition d'une direction privilégiée (66) sur la base des fréquences des données angulaires calculées, de sorte que la direction privilégiée correspond à une donnée angulaire, qui présente une fréquence maximale,
• le calcul des positions des points d'image saisis le long de la direction privilégiée (66), dans lequel les positions correspondent à des écarts des points d'image saisis par rapport à un plan imaginaire dressé perpendiculairement à la direction privilégiée,
• la détection d'un plan principal de l'entrepôt sur la base d'une distribution des fréquences des positions calculées, dans lequel le plan principal est orienté perpendiculairement à la direction privilégiée et se trouve dans une position, où la distribution des fréquences présente une valeur maximale.

2. Procédé selon la revendication 1, **caractérisé en ce que** les éléments d'image, pour lesquels les données angulaires sont calculées, sont évalués respectivement par le biais d'une moyenne de tous les points d'image contenus dans un élément de volume prédéterminé.

3. Procédé selon la revendication 1 ou 2, **caractérisé en ce que** l'un des plans principaux est un plan de mur, qui est détecté à une première position et perpendiculairement à la direction privilégiée (66), lorsque la distribution des fréquences présente une première valeur maximale (30) à la première position et que le nombre des points d'image présentant des positions plus éloignées de la caméra 3D (18) est plus faible qu'une première valeur limite prédéterminée.

4. Procédé selon la revendication 3, **caractérisé en ce que** l'un des plans principaux est un plan frontal de rayonnage (14), qui est détecté à une deuxième position et perpendiculairement à la direction privilégiée (66), lorsque la distribution des fréquences présente une deuxième valeur maximale (32) à la deuxième position et que la deuxième position est disposée de 0,9 m à 1,7 m plus près de la caméra 3D (18) que la première position.

5. Procédé selon l'une des revendications 1 à 4, **caractérisé en ce que** l'un des plans principaux est un plan frontal de rayonnage (14), qui est détecté à une troisième position et perpendiculairement à la direction privilégiée (66), lorsque la distribution des fréquences ne présente qu'une unique valeur maximale caractéristique (34), qui est localisée à la troisième position, et que le nombre des points d'image présentant des positions plus éloignées de la caméra 3D (18) est plus grand qu'une seconde valeur limite prédéterminée.

6. Procédé selon l'une des revendications 1 à 5, **caractérisé par** les autres étapes suivantes :
• la projection des points d'image, qui se situent aux abords d'un plan principal connu, sur ce plan principal, et
• la détection d'objets de l'entrepôt moyennant la comparaison des données bidimensionnelles projetées à des modèles prédéfinis.

7. Procédé selon l'une des revendications 1 à 6, **caractérisé en ce que** le chariot de manutention (16) présente un système de navigation, qui met à disposition les données de position localisant le chariot de manutention (16) dans l'entrepôt, et que les données de position sont corrigées compte tenu d'un plan principal détecté.

8. Procédé selon l'une des revendications 1 à 7, **caractérisé en ce que** la caméra 3D (18) est une caméra temps de vol *(time of flight*) ou un système de caméra, qui projette et reproduit un modèle défini sur le champ d'image, tout en déterminant les informations de distance à partir d'un déplacement du modèle.

9. Chariot de manutention (16) doté d'un dispositif de détection d'un plan principal d'un entrepôt, dans lequel le dispositif comprend les composants suivants :
• une caméra 3D (18) servant à saisir les données d'image, dans lequel la caméra 3D (18) est fixée au chariot de manutention, de sorte qu'une direction de visée de la caméra 3D (18) présente un angle défini par rapport à l'horizontale, comporte un capteur d'image doté d'éléments détecteurs disposés selon une matrice et les données d'image comprennent de multiples points d'image, auxquels une information de distance est assignée respectivement,
**caractérisé par**
• un dispositif d'analyse servant à évaluer les données d'image, qui est conçu pour calculer les données angulaires de multiples éléments d'image, dans lequel chaque élément d'image est constitué de multiples points d'image regroupés par voie mathématique et représente une surface, tandis que les données angulaires indiquent respectivement un angle entre une surface représentée par l'élément d'image et un plan de référence vertical ; pour définir une direction privilégiée sur la base des fréquences des données angulaires calculées, de sorte que la direction privilégiée correspond à une donnée angulaire, qui présente une fréquence maximale ; pour calculer les positions des points d'image saisis le long de la direction privilégiée, dans lequel les positions correspondent à des écarts des points d'image saisis par rapport à un plan imaginaire dressé perpendiculairement à la direction privilégiée ; et pour détecter un plan principal de l'entrepôt sur la base d'une distribution des fréquences des positions calculées, dans lequel le plan principal est orienté perpendiculairement à la direction privilégiée et est localisé à une position, où la distribution des fréquences présente une valeur maximale.
